# EUROPÄISCHE PATENTSCHRIFT

(11) **EP 0 810 964 B1**
(45) Veröffentlichungstag und Bekanntmachung des Hinweises auf die Patenterteilung: **26.05.1999**
(21) Anmeldenummer: 96903957.7
(22) Anmeldetag: 01.02.1996
(51) Int. Cl.: B65G 47/68

(54) **Vorrichtung zum Vereinigen, Sortieren und Drehen von Stückgut**
Merging, sorting and turning device for parcels
Dispositif pour aligner, trier et tourner des colis

(30) Priorität: 23.02.1995 DE 29503014 U
(43) Veröffentlichungstag der Anmeldung: 10.12.1997
(73) Patentinhaber: Natec Reich, Summer GmbH & Co. KG, 88178 Heimenkirch (DE)
(72) Erfinder: BAUR, Wilhelm, D-88167 Gestratz (DE)
(74) Vertreter: Riebling, Peter, Dr.-Ing.
(86) Internationale Anmeldenummer: EP9600416
(87) Internationale Veröffentlichungsnummer: WO9626141

(56) Entgegenhaltungen:
- DE-C- 708 997
- US-A- 2 805 753
- US-A- 4 004 677

## Beschreibung

Gegenstand der vorliegenden Erfindung ist eine multifunktionale Vorrichtung zum Vereinigen, Sortieren und Drehen von Stückgut, die zum Beispiel zum Zusammenführen zweier Produktstraßen zu einer einzigen Produktstraße dienen kann. Es ist nun in der Regel so, daß nicht nur die Produktstraßen einfach zusammengeführt werden sollen, sondern darüber hinaus auch defekte Produkte zuverlässig ausgeschieden werden sollen. In manchen Fällen kann darüber hinaus eine Verdrehung der zugelieferten Produkte, beispielsweise aus Verpackungsgründen, erforderlich sein.

Bisher wurden für diese drei Aufgaben - Vereinigen, Aussondern, Verdrehen - drei getrennte Maschinen eingesetzt. Dies hat einen sehr großen Platzbedarf sowie einen hohen finanziellen Aufwand zur Folge.

Aus der US-A-4,004,677 geht ein Linienvereiniger hervor, der zutransportierte Teile von zwei parallel laufenden Transportbändern auf einem abtransportierenden Transportband positioniert. Diese zutransportierten Teile werden mit einer zweiteiligen Führungseinheit in die Mitte des abtransportierenden Transportbandes geleitet und ausgerichtet. Dabei werden die bereits ausgerichteten zu transportierenden Teile quer zu den Längsachsen der Transportbänder verschoben. Das heißt, dieser Linienvereiniger hat die Funktion, zwei Linien zu vereinigen, und die transportierten Teile auf einem Transportband zusammenzuführen und auf dem abtransportierenden Transportband anhand der beiden kreisabschnittförmig gebogenen Leiteinrichtungen auszurichten.

Es sind also zwei gegenüber angeordnete Leiteinrichtungen zur Ausrichtung der Teile erforderlich.

Aus der US-A-2,805,753 geht eine Drehvorrichtung für Stückgut auf Förderbändern hervor, die im wesentlichen das auf dem Förderband transportierte Stückgut um 90° verdreht. Um eine exakte Drehung von 90° zu erreichen, wodurch das Stückgut mit seinen Seitenflächen wieder parallel zu den Kanten des Förderbandes ausgerichtet ist, ist am Ausgang der Drehvorrichtung eine Führung angeordnet, die das Stückgut entsprechend ausrichtet.

Es handelt sich also auch bei dieser Vorrichtung um eine aus zwei gegenüber angeordneten Funktionseinheiten, wobei erst durch deren Zusammenwirken der Bearbeitungsprozeß in der korekten Weise möglich wird.

Aufgabe der vorliegenden Neuerung ist es daher, eine multifunktionale Vorrichtung für die Prozeßschritte:
a.) Vereinigung von Stückgut aus einem zu vereinigenden Stückgutstrom, der auf wenigstens zwei Zuführförderbändern zugeführt wird,
b.) gezielte Sortierung von Stückgut auf der Grundlage vorgebbarer Kriterien und
c.) Drehen von Stückgut
zu entwickeln, die unabhängig von den Abmessungen des Stückguts, wahlweise in Kombination oder einzeln, die drei Vorgänge Zusammenführen, Sortieren und Drehen verrichtet, wobei pro Zuführförderband jeweils nur eine einzige Funktionseinheit für die Prozeßschritte Sortieren und/oder Drehen notwendig ist.

Erfindungsgemäß wird diese Aufgabe durch die technische Lehre des Anspruches 1 gelöst.

Hierbei ist wesentlich, daß auf einem von mehreren Zulieferbändern belieferten Tisch entsprechend viele Führungs- und Dreheinrichtungen angeordnet sind. Mit Hilfe der Führungseinrichtungen werden die jeweils zugelieferten Produkte entweder zu vorgesehenen Transportstellen transportiert oder ausgeschieden, falls sie defekt sind; mit Hilfe der Dreheinrichtung kann ein Verdrehen um einen bestimmten Winkel erfolgen.

Es wird hierbei bevorzugt, wenn jeweils zwei Führungs- und Dreheinrichtungen sowie zwei Zuliefer- bzw. Auftaktbänder vor-gesehen sind. In diesem Fall sind die Führungseinrichtungen bevorzugt schwenkbar ausgebildet und bilden im Betrieb entweder einen im wesentlichen V-förmigen Kanal zur Aufnahme und Vereinigung der zugeführten Produkte, falls diese Produkte die Qualitätskriterien erfüllen. Es ist dann möglich, die Führungseinrichtungen getrennt voneinander zu verschwenken, so daß beim Auftreten einer defekten Packung dieser der Durchtritt durch die Öffnungen der Führungseinrichtungen verwehrt wird.

In einer bevorzugten Ausgestaltungsform ist die Dreheinrichtung in Form eines Anschlages direkt an den Führungseinrichtungen befestigt. Dieser Anschlag kann starr oder federnd ausgebildet sein; seine Anlaufkante kann verschiedene geometrische Formen, insbesondere rund, eckig, oval und auch anders, aufweisen. Es ist ebenfalls möglich, den Anschlag einstellbar und zusätzlich federnd auszubilden.

Um zu erfassen, ob einzelne Packungen defekt sind, ist es vorgesehen, bereits an den Zulieferbändern oder Auftaktbändern entsprechende Sensoren oder Meßgeräte anzubringen. Diese Sensoren erfassen den Zustand der Packung und geben diesen über eine Steuerung an die jeweilige Führungseinrichtung weiter. Falls die Packung in Ordnung ist, wird die Führungseinrichtung nach außen verschwenkt bzw. in diesen Zustand belassen, so daß die Packung zwischen die Führungseinrichtungen eintreten kann. Ist die Packung hingegen defekt, so wird die Führungseinrichtung nach innen verschwenkt bzw. in diesem Zustand belassen, so daß die Packung an der Außenseite der Führungseinrichtung auftrifft, von dieser abgelenkt und hierdurch ausgesondert wird.

Um nun auch empfindliche Produkte, wie z. B. Lebensmittel, ins-besondere Käse oder ähnlich weiche Lebensmittel durch die neuerungsgemäße Anlage laufen zu lassen, wird der Tisch bevorzugt mit einem Rollenteppich versehen. Dieser Rollenteppich kann hierbei entweder aus einzelnen einfach aufgebrachten Rollen bestehen, oder es ist ein umlaufender Rollenteppich vorgesehen. Die Verwendung dieses Rollenteppichs ermöglicht es, die Anlagekräfte auf die Packungen gering zu halten. Hierdurch wird zuverlässig eine Verformung oder Beschädigung auch bei weichen Produkten vermieden.

Im folgenden wird die Erfindung anhand von lediglich einen Ausführungsweg darstellenden Zeichnungen näher erläutert. Hierbei gehen aus den Zeichnungen und ihrer Beschreibung die erfindungswesentlichen Merkmale und weitere Vorteile der Erfindung hervor.

Dabei zeigt
Figur 1: eine Draufsicht auf die erfindungsgemäße Vorrichtung,
Figur 2: eine Ansicht gemäß Figur 1 in der Arbeitsposition,
Figur 3: eine Vergrößerung aus Figur 2.

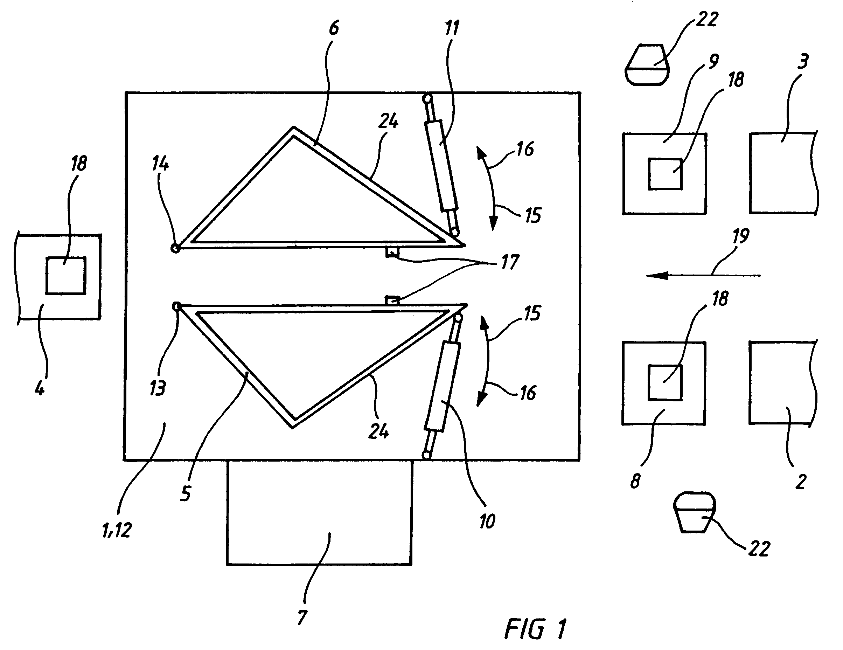

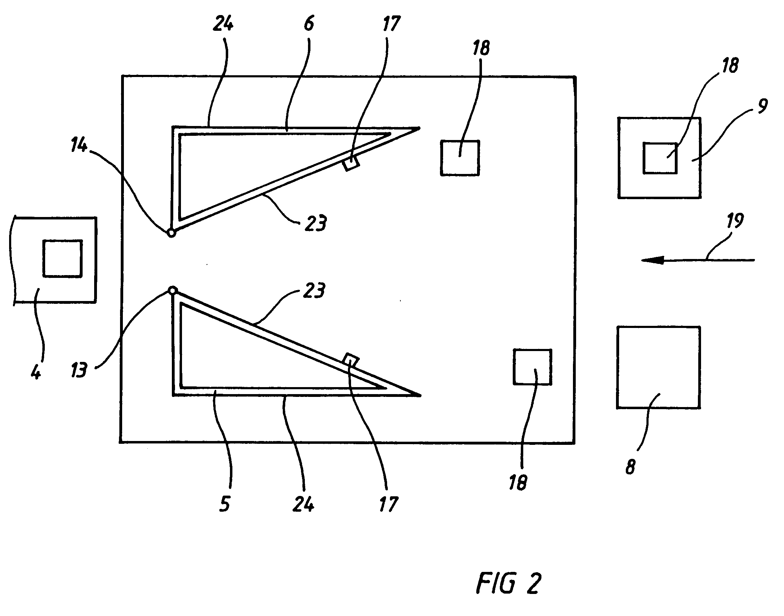

Gemäß den Figuren 1, 2 besteht die neuerungsgemäße multifunktionale Vorrichtung im wesentlichen aus einem Tisch 1, der von zwei Zulieferbändern 2, 3 über zugehörige Auftaktbänder 8, 9 in Pfeilrichtung 19 beaufschlagt wird. Diese Bänder bringen Packungen 18, die durch die Anlage in Pfeilrichtung 19 laufen und anschließend von einem Abführband 4 wieder abtransportiert werden.

Auf dem Tisch 1 ist hierbei zunächst ein Rollenteppich vorgesehen, über dem zwei Führungseinrichtungen 5, 6 angebracht sind.

Die Führungseinrichtungen weisen hierbei innere Gleit- und Anlageflächen 23, und äußere Gleit- und Anlageflächen 24 auf. Dabei weist die innere Gleit- und Anlagefläche 23 zur Mitte des Tisches hin und die äußere Gleit- und Anlagefläche 24 zur Außenkante des Tisches. Auf der inneren Gleit- und Anlagefläche 23 ist bei jeder Führungseinrichtung 5, 6 ein Vorsprung 17 angebracht.

Die Wirkungsweise ist nun folgendermaßen:
Die Packungen 18 werden von den beiden Zulieferbändern 2, 3 auf die Auftaktbänder 8, 9 gegeben. Hier ist jeweils ein Sensor 22 vorhanden, der den Zustand der Packung 18 überprüft. Befindet sich nun eine fehlerhafte Packung auf einem Auftaktband 8, 9, so wird die zugehörige Führungseinrichtung 5, 6 mit Hilfe des jeweiligen Kolbens 10, 11 um ihre Drehachse 13, 14 in Pfeilrichtung 15 nach innen verschwenkt. Die fehlerhafte Packung 18 kommt somit zur Anlage an der äußeren Gleitfläche 24, gleitet an dieser entlang und fällt beispielsweise in einen dafür vorgesehenen Behälter 7.

Falls die Packung 18 in Ordnung ist, wird die Führungseinrichtung 5, 6 in Pfeilrichtung 16 nach außen verschwenkt.

Wie aus Figur 2 hervorgeht, arbeiten die Auftaktbänder 8, 9 versetzt. Dies ist erforderlich, da sonst die Packungen 18 im hinteren Bereich der Führungseinrichtungen 5, 6 zusammenstoßen und sich verkeilen würden.

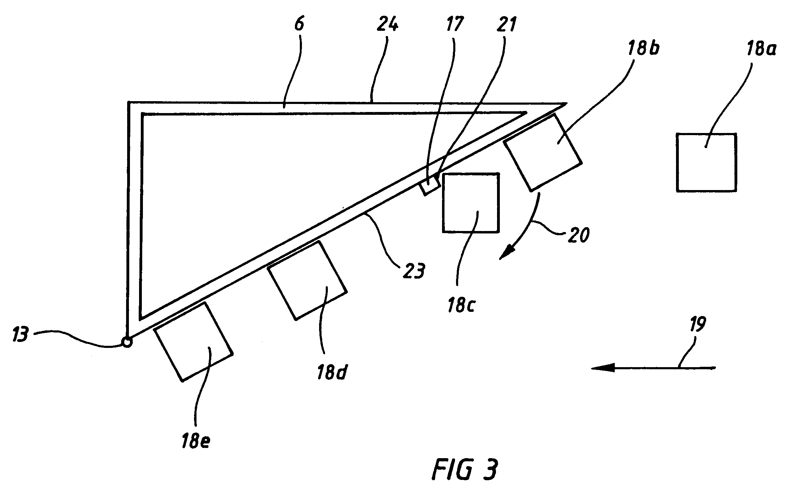

Figur 3 zeigt schematisch den Dreh- und Zentriervorgang. Eine Packung 18 wird zunächst in ihre Stellung 18a vom Auftaktband 9 auf den Rollenteppich 12 aufgebracht. Sie bewegt sich dann auf-grund der Bewegung des Rollenteppiches in Pfeilrichtung 19 fort und gelangt schließlich zur Anlage an die innere Gleitfläche 23 der Führungseinrichtung 6. Sie bewegt sich dann an dieser inneren Gleitfläche entlang, bis sie in Kontakt mit der Anlaufkante 21 des Vorsprunges 17 kommt. Da der Rollenteppich sich weiterhin in Pfeilrichtung 19 bewegt, wird die Packung 18 in Pfeilrichtung 20 in ihre Stellung 18c verdreht, danach wird sie durch den Rollenteppich weiter in die Stellungen 18d, 18e befördert und schließlich auf das Abführband 4 aufgebracht.

Insgesamt wird durch die geführte Konstruktion eine kostengünstige und platzsparende Bauweise erreicht. In einer bevorzugten Aussführungsform, bei der die Führungseinrichtungen 5, 6 schwenkbar über dem Rollenteppich 12 auf dem Tisch 1 angebracht sind, lassen sich sämtliche der drei oben genannten Funktionen gleichzeitig erfüllen.

Mit dem Gegenstand der vorliegenden Erfindung wird somit eine kostengünstige, konstruktiv einfache und platzsparende Anlage bereitgestellt.

## Patentansprüche

1. Multifunktionale Vorrichtung zum Vereinigen, Sortieren und Drehen von Stückgut auf der Basis eines Linienvereinigers mit Dreheinrichtung, ausgestattet mit einer Transporteinrichtung für Stückgut, an der auf einem Tisch (1) eine oder mehrere gesteuert schwenkbare Führungseinrichtungen (5, 6) zur gezielten Sortierung von Stückgut (18) aus zu vereinigenden Stückgutströmen angeordnet sind.

2. Multifunktionale Vorrichtung nach Anspruch 1, dadurch gekennzeichnet, daß die Führungseinrichtungen entsprechend den Signalen einer Erkennungseinrichtung verstellbar sind.

3. Multifunktionale Vorrichtung nach einem der Ansprüche 1 oder 2 , dadurch gekennzeichnet, daß die Führungseinrichtungen (5, 6) eine innere Gleit- und Anlagefläche (23) aufweisen, die zur Tischmitte hin ausgerichtet ist, und eine äußere Gleit- und Anlagefläche (24), die zur Tischaußenseite hin ausgerichtet ist.

4. Multifunktionale Vorrichtung nach Anspruch 3 bis 3, dadurch gekennzeichnet, daß das erste Drittel der inneren Gleit- und Anlagefläche (23), mit der das Stückgut (18) geführt wird, zur Ausrichtung des Stückgutes und zum Ausgleich von Positioniertoleranzen dient.

5. Multifunktionale Vorrichtung nach Anspruch 3 oder 4, dadurch gekennzeichnet, daß durch die Schrägstellung der inneren Gleit- und Anlagefläche (23) mit abschließender Kante am Schwenkpunkt (13,14) eine exakte Ausrichtung des Stückgutes (18) mit nur einer einzigen, einseitigen Führungseinrichtung (5,6) zur Transportrichtung hin erfolgt.

6. Multifunktionale Vorrichtung nach einem der Ansprüche 1 bis 5, dadurch gekennzeichnet, daß einer oder mehrere Sensoren (22) zum Erfassen der Sortiermerkmale des Stückgutes (18) angeordnet sind.

7. Multifunktionale Vorrichtung nach einem der Ansprüche 3 bis 6, dadurch gekennzeichnet, daß an der inneren Gleit- und Anlagefläche (23) in Transportrichtung gesehen am Ende des ersten Drittels der Gleitfläche (23) die Dreheinrichtung (17) angeordnet ist.

8. Multifunktionale Vorrichtung nach einem der Ansprüche 1 bis 7, dadurch gekennzeichnet, daß der Tisch (1) mit einem Rollenteppich (12) versehen ist.

## Claims

1. A multifunctional device for the combining, sorting and rotating of parcelled goods, based on a line combiner with rotary device, equipped with a transport device for parcelled goods, on which one or more separately swivellable guide devices (5, 6) on a table (1) are arranged for the sorting, in line with specific objectives, of parcelled goods (18) from streams of parcel led goods which are to be combined.

2. The multifunctional device according to Claim 1, characterised in that the guide devices are adjustable according to the signals of a detection device.

3. The multifunctional device according to any of Claims 1 or 2, characterised in that the guide devices (5, 6) have an inner sliding- and arranging surface (23) which is aligned towards the centre of the table, and an outer sliding- and arranging surface (24) which is aligned towards the exterior of the table.

4. The multifunctional device according to Claim 3, characterised in that the first third of the inner sliding-and arranging surface (23), by which the parcelled goods (18) are guided, serves for the alignment of the parcelled goods and for balancing out positioning tolerances.

5. The multifunctional device according to Claim 3 or 4, characterised in that through the oblique position of the inner sliding- and arranging surface (23) with a definitive edge at the centre of gravity (13, 14) an exact alignment of the parcelled goods (18) takes place with only a single guide device (5, 6) on one side towards the transport direction.

6. The multifunctional device according to any of Claims 1 to 5, characterised in that one or more sensors (22) are arranged for detecting the sorting features of the parcelled goods (18).

7. The multifunctional device according to any of Claims 3 to 6, characterised in that on the inner sliding- and arranging surface (23) viewed in the transporting direction, the rotary device (17) is arranged at the end of the first third of the sliding surface (23).

8. The multifunctional device according to any of Claims 1 to 7, characterised in that the table (1) is provided with a roller mat (12).

## Revendications

1. Installation multifonctionnelle pour réunir, trier et tourner des produits isolés, sur la base d'un dispositif de réunion de chaînes de production pourvu d'un dispositif de rotation, équipée d'un dispositif de transport pour les produits isolés au niveau duquel un ou plusieurs dispositifs de guidage (5, 6) aptes à pivoter de manière commandée sont disposés sur une table (1) pour trier en conséquence des produits isolés (18) provenant de flux de produits isolés à réunir.

2. Installation multifonctionnelle selon la revendication 1, caractérisée en ce que les dispositifs de guidage sont réglables en fonction des signaux d'un dispositif d'identification.

3. Installation multifonctionnelle selon la revendication 1 ou 2, caractérisée en ce que les dispositifs de guidage (5, 6) comportent une surface de glissement et d'appui intérieure (23) qui est dirigée vers le centre de la table, et une surface de glissement et d'appui extérieure (24) qui est dirigée vers le côté extérieur de la table.

4. Installation multifonctionnelle selon la revendication 3, caractérisée en ce que le premier tiers de la surface de glissement et d'appui intérieure (23) grâce à laquelle le produit isolé (18) est guidé sert à orienter celui-ci et à compenser les tolérances de positionnement.

5. Installation multifonctionnelle selon la revendication 3 ou 4, caractérisée en ce que grâce à la position en biais de la surface de glissement et d'appui intérieure (23), dont le bord d'extrémité est placé au niveau du point de pivotement (13, 14), le produit isolé (18) est orienté avec précision vers le sens de transport à l'aide d'un seul dispositif de guidage unilatéral (5, 6).

6. Installation multifonctionnelle selon l'une des revendications 1 à 5, caractérisée en ce qu'il est prévu un ou plusieurs capteurs (22) pour détecter les caractéristiques de tri du produit isolé (18).

7. Installation multifonctionnelle selon l'une des revendications 3 à 6, caractérisée en ce que le dispositif de rotation (17) est disposé à la fin du premier tiers de la surface de glissement et d'appui intérieure (23), si on considère le sens du transport.

8. Installation multifonctionnelle selon l'une des revendications 1 à 7, caractérisée en ce que la table (1) est pourvue d'un tapis à rouleaux (12).
